# EUROPEAN PATENT SPECIFICATION

(11) **EP 3 957 660 B1**
(45) Date of publication and mention of the grant of the patent: **25.06.2025**
(21) Application number: 20872179.5
(22) Date of filing: 28.09.2020
(51) Int. Cl.: C08F 210/16, C08F 210/14, C08F 4/6592, C08F 2/01, C08F 4/659, C08L 23/08

(54) **OLEFIN-BASED POLYMER**
OLEFINBASIERTES POLYMER
POLYMÈRE À BASE D'OLÉFINE

(30) Priority: 30.09.2019 KR 20190121153
(43) Date of publication of application: 23.02.2022
(73) Proprietor: LG CHEM, LTD., Yeongdeungpo-gu, Seoul 07336 (KR)
(72) Inventor: KIM, Tae Su, Daejeon 34122 (KR); PARK, In Sung, Daejeon 34122 (KR); PARK, Sang Eun, Daejeon 34122 (KR); LEE, Eun Jung, Daejeon 34122 (KR); LEE, Choong Hoon, Daejeon 34122 (KR); GONG, Jin Sam, Daejeon 34122 (KR); JUN, Jung Ho, Daejeon 34122 (KR); GWAK, Rae Keun, Daejeon 34122 (KR)
(74) Representative: Hoffmann Eitle
(86) International application number: PCT/KR2020/013280
(87) International publication number: WO 2021/066490

(56) References cited:
- WO-A1-2008/140205
- WO-A1-96/09166
- KR-A- 20160 124 788
- KR-A- 20180 051 223
- KR-A- 20190 076 499
- US-A- 6 005 053

## Description

### TECHNICAL FIELD

### [Cross-reference to Related Applications]

This application claims the benefit of Korean Patent Application No. 10-2019-0121153, filed on September 30, 2019, in the Korean Intellectual Property Office.

### [Technical Field]

The present invention relates to an olefin-based polymer that is a copolymer of ethylene and any one selected from the group consisting of propylene, 1-butene, 1-pentene, 4-methyl-1-pentene, 1-hexene, 1-heptene, and 1-octene, or mixtures of two or more thereof, and more particularly, to a low-density olefin-based polymer that is a copolymer of ethylene and any one selected from the group consisting of propylene, 1-butene, 1-pentene, 4-methyl-1-pentene, 1-hexene, 1-heptene, and 1-octene, or mixtures of two or more thereof, introducing a highly crystalline region and showing high mechanical rigidity.

### BACKGROUND ART

Polyolefin has excellent moldability, heat resistance, mechanical properties, sanitary quality, permeability of water vapor and appearance characteristics of a molded article, and is widely used as an extrusion molded article, blow molded article and injection molded article. However, there are problems in that polyolefin, particularly, polyethylene has no polar group in a molecule, and has low compatibility with a polar resin such as nylon and poor adhesiveness with a polar resin and a metal. As a result, it has been difficult to blend polyolefin with a polar resin and a metal or laminate with such materials for use. In addition, the molded article of polyolefin has defects of low surface hydrophilicity and antistatic properties.

In order to solve such problems and raise affinity with respect to polar materials, a method of grafting a monomer containing a polar group onto polyolefin through radical polymerization has been widely used. However, according to this method, crosslinking and molecular branch in the molecule of polyolefin may be cleaved during grafting reaction, and the viscosity balance between a graft polymer and a polar resin is not good, and miscibility therebetween is low. In addition, there are problems in that due to gel components produced in a molecule by crosslinking or foreign materials produced by the cleavage of a molecular chain, the appearance characteristics of a molded article is poor.

In addition, as a method for preparing an olefin polymer such as an ethylene homopolymer, an ethylene/α-olefin copolymer, a propylene homopolymer and a propylene/ α-olefin copolymer, a method of copolymerizing a polar monomer in the presence of a metal catalyst such as a titanium catalyst and a vanadium catalyst has been used. However, in case of copolymerizing a polar monomer using such a metal catalyst, there are problems of attaining wide molecular weight distribution or composition distribution and low polymerization activity.

In addition, as another method, a polymerization method in the presence of a metallocene catalyst formed using a transition metal compound such as zircononocene dichloride and an organoaluminum oxy compound (aluminoxane) is known. In case of using a metallocene catalyst, an olefin polymer with a high molecular weight is obtained in high activity, and the olefin polymer thus produced has narrow molecular weight distribution and narrow composition distribution.

In addition, as a method of preparing polyolefin containing a polar group, a method of using a metallocene catalyst using a metallocene compound having a ligand of a non-crosslinked cyclopentadienyl group, a crosslinked or non-crosslinked bis indenyl group, or an ethylene crosslinked unsubstituted indenyl group/fluorenyl group as a catalyst, is known. However, this method has defects of very low polymerization activity. Accordingly, a method of protecting a polar group by a protecting group is performed, but in case of introducing a protecting group, this protecting group is required to be removed after reaction, resulting in a complicated process.

An ansa-metallocene compound is an organometal compound including two ligands connected by a bridge group, and due to the bridge group, the rotation of the ligands is prevented, and the activity and structure of a metal center is determined.

Such an ansa-metallocene compound is used as a catalyst for preparing an olefin-based homopolymer or copolymer. Particularly, it is known that an ansa-metallocene compound including a cyclopentadienyl-fluorenyl ligand may produce polyethylene having a high molecular weight, and through this, the microstructure of polypropylene may be controlled.

In addition, it is known that an ansa-metallocene compound including an indenyl ligand has excellent activity and may produce polyolefin having improved stereoregularity. As described above, various studies on an ansa-metallocene compound capable of controlling the microstructure of an olefin-based polymer have been conducted, but the degrees are not yet enough.

Ethylene-alpha olefin copolymers and methods for their preparation are known from numerous prior art references. WO 2008/140205 A1 describes an ethylene-alpha olefin copolymer having a narrow molecular weight distribution, a uniform comonomer distribution and low density. The catalysts employed here conform to the following Formula 1, and are preferably of the following Formula 2, and hydrogen may be added during the polymerization: 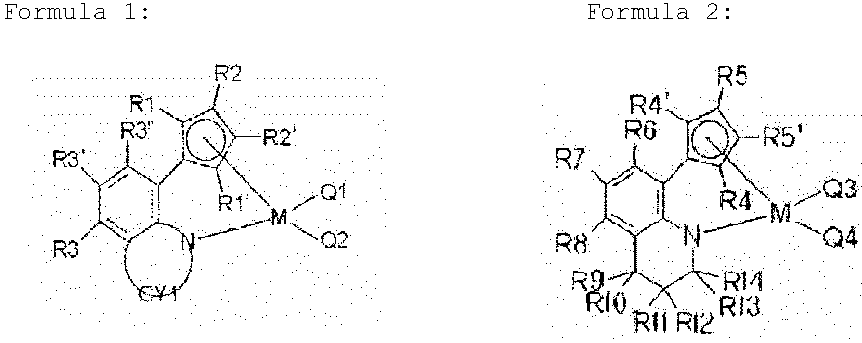 KR 2019 0076499 A describes copolymers prepared by relying on catalysts of the following general formulae. The addition of hydrogen is not disclosed. 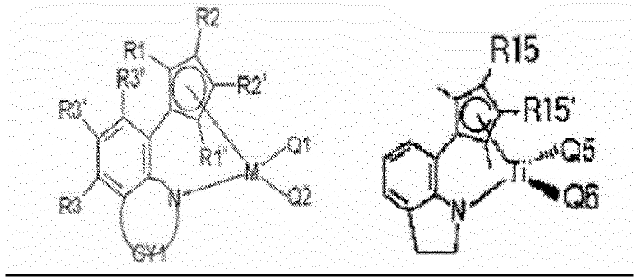 XA further example of a document relating to the preparation of copolymers, in this case having a multi-rod composition distribution, is KR 2016 0124788 A.

### DISCLOSURE OF THE INVENTION

### TECHNICAL PROBLEM

The task to be solved of the present invention is to provide a low-density olefin-based polymer obtained by polymerizing an olefin-based monomer by injecting a hydrogen gas using a transition metal catalyst, thereby introducing a highly crystalline region and showing high mechanical rigidity.

### TECHNICAL SOLUTION

To solve the above tasks, the present invention provides an olefin-based polymer that is a copolymer of ethylene and any one selected from the group consisting of propylene, 1-butene, 1-pentene, 4-methyl-1-pentene, 1-hexene, 1-heptene, and 1-octene, or mixtures of two or more thereof, as further defined in the claims.

### ADVANTAGEOUS EFFECTS

The olefin-based polymer according to the present invention is a low-density olefin-based polymer, that is a copolymer of ethylene and any one selected from the group consisting of propylene, 1-butene, 1-pentene, 4-methyl-1-pentene, 1-hexene, 1-heptene, and 1-octene, or mixtures of two or more thereof, wherein a highly crystalline region is introduced, and high mechanical rigidity is shown.

### BRIEF DESCRIPTION ON DRAWINGS

FIG. 1 is a graph showing measured results of a melting temperature using differential scanning calorimetry (DSC) on a polymer of Example 1.
FIG. 2 is a graph showing measured results of a melting temperature using differential scanning calorimetry (DSC) on a polymer of Comparative Example 1.
FIG. 3 is a graph showing measured results of a total enthalpy of fusion ΔH(75) at 75°C to 150°C by a differential scanning calorimetry precise measurement method (SSA) on a polymer of Example 1.
FIG. 4 is a graph showing measured results of a total enthalpy of fusion ΔH(75) at 75°C to 150°C by a differential scanning calorimetry precise measurement method (SSA) on a polymer of Comparative Example 1.

### BEST MODE FOR CARRYING OUT THE INVENTION

Hereinafter, the present invention will be described in more detail to assist the understanding of the present invention.

The copolymer of ethylene and any one selected from the group consisting of propylene, 1-butene, 1-pentene, 4-methyl-1-pentene, 1-hexene, 1-heptene, and 1-octene, or mixtures of two or more thereof according to the present invention (in the following also referred to as "olefin-based polymer") satisfies conditions (1) to (4) below.
(1) A melt index (MI, 190°C, 2.16 kg load conditions) is from 0.1 g/10 min to 10.0 g/10 min, (2) a melting temperature when measured by differential scanning calorimetry (DSC) is from 20°C to 70°C, (3) a high temperature melting peak is confirmed at 75°C to 150°C when measured by a differential scanning calorimetry precise measurement method (SSA), and a total enthalpy of fusion ΔH(75) of a corresponding region is 1.0 J/g or more; and (4) a density (d) is from 0.850 g/cc to 0.890 g/cc.

The olefin-based polymer according to the present invention has a very low density and introduces a highly crystalline region when compared with a common conventional olefin-based polymer, and in case of having the same degrees of density and melt index (MI, 190°C, 2.16 kg load conditions), even higher tensile strength and tearing strength may be shown. The olefin-based polymer according to the present invention is prepared by a preparation method including a step of polymerizing an olefin-based monomer by injecting a hydrogen gas in the presence of a catalyst composition for polymerizing olefin, and according to the injection of the hydrogen gas during polymerization, a highly crystalline region is introduced, and excellent mechanical rigidity is shown.

The melt index (MI) may be controlled by controlling an amount of the comonomer used and that of a catalyst used in the process of polymerizing an olefin-based polymer and influences the mechanical properties and impact strength of the olefin-based polymer, and its moldability. In the present disclosure, the melt index is measured under low-density conditions of 0.850 g/cc to 0.890 g/cc according to ASTM D1238 at 190°C and 2.16 kg load conditions, and is 0.1 g/10 min to 10 g/ 10 min, and may particularly be 0.3 g/10 min to 9 g/10 min, more particularly, 0.4 g/10 min to 7 g/10 min.

The melting temperature (Tm) when measured by differential scanning calorimetry (DSC) is 20°C to 70°C, and may particularly be 20°C to 60°C, more particularly, 25°C to 50°C.

A high temperature melting peak is confirmed at 75°C to 150°C when measured by a differential scanning calorimetry precise measurement method (SSA), and particularly, the corresponding region may be 75°C to 145°C, more particularly, 75°C to 135°C. In this case, the total enthalpy of fusion ΔH(75) of the corresponding region is 1.0 J/g or more, and may particularly be 1.0 J/g to 3.0 J/g, more particularly, 1.0 J/g to 2.0 J/g.

The measurement of a melting temperature (Tm) using differential scanning calorimetry is performed by a first cycle including heating to a temperature higher by 30°C than the melting temperature (Tm) at a constant rate, and cooling to a temperature lower by 30°C than a glass transition temperature (Tg) at a constant rate and a second cycle to obtain the peak of a standard melting temperature (Tm). The differential scanning calorimetry precise measurement method (SSA) is a method of obtaining crystal information by undergoing a process of heating immediately before the peak of a melting temperature (Tm) and cooling after the first cycle using differential scanning calorimetry (DSC), and repeatedly performing heating to a temperature reduced by 5°C and cooling (Eur. Polym. J. 2015, 65, 132).

In case of introducing a small amount of a highly crystalline region to an olefin-based polymer, a high temperature melting peak may not be shown when measured by a melting temperature using general differential scanning calorimetry (DSC) but may be measured through the differential scanning calorimetry precise measurement method (SSA).

In the olefin-based polymer of the present invention, a high temperature melting peak is confirmed in the temperature range when measured by a differential scanning calorimetry precise measurement method (SSA), and by satisfying the range of the total enthalpy of fusion ΔH(75) of the corresponding region, even higher mechanical rigidity may be attained with equivalent degrees of density and melting index value when compared with a common conventional olefin-based polymer.

Meanwhile, the olefin-based polymer of the present invention has (4) a density of 0.850 g/cc to 0.890 g/cc, and particularly, the density may be 0.850 g/cc to 0.880 g/cc, more particularly, 0.860 g/cc to 0.875 g/cc.

Generally, the density of an olefin-based polymer is influenced by the type and amount of a monomer used for polymerization, a polymerization degree, etc., and in case of a copolymer, the influence by the amount of a comonomer is significant. The olefin-based polymer of the present invention is polymerized using a catalyst composition including a transition metal compound having a characteristic structure, and a large amount of comonomer may be introduced. Accordingly, the olefin-based polymer of the present invention may have a low density as in the above-described range.

In addition, the olefin-based polymer according to an embodiment of the present invention may additionally satisfy the conditions of (5) a weight average molecular weight (Mw) of 10,000 g/mol to 500,000 g/mol, and particularly, the weight average molecular weight (Mw) may be 30,000 g/mol to 300,000 g/mol, more particularly, 50,000 g/mol to 200,000 g/mol. In the present invention, the weight average molecular weight (Mw) is a polystyrene conversion molecular weight analyzed by gel permeation chromatography (GPC).

In addition, the olefin-based polymer according to an embodiment of the present invention may additionally satisfy the conditions of (6) molecular weight distribution (MWD) which is the ratio (Mw/Mn) of a weight average molecular weight (Mw) and a number average molecular weight (Mn), of 1.0 to 6.0, and the molecular weight distribution (MWD) may particularly be 1.0 to 4.0, more particularly, 2.0 to 3.0.

The olefin-based polymer is a copolymer of ethylene and any one selected from the group consisting of propylene, 1-butene, 1-pentene, 4-methyl-1-pentene, 1-hexene, 1-heptene, and 1-octene, or mixtures of two or more thereof.

More particularly, the olefin-based copolymer according to an embodiment of the present invention may be a copolymer of ethylene with propylene, ethylene with 1-butene, ethylene with 1-hexene, ethylene with 4-methyl-1-pentene or ethylene with 1-octene, and more particularly, the olefin copolymer according to an embodiment of the present invention may be a copolymer of ethylene with 1-butene.

The amount of the alpha-olefin, i.e., any one selected from the group consisting of propylene, 1-butene, 1-pentene, 4-methyl-1-pentene, 1-hexene, 1-heptene, and 1-octene, or mixtures of two or more thereof, may be 90 wt% or less, more particularly, 70 wt% or less, further more particularly, 5 wt% to 60 wt%, further more particularly, 20 wt% to 50 wt% based on the total weight of the copolymer. If the alpha-olefin is included in the range, the achievement of the above-described physical properties may be easy.

The olefin-based polymer according to an embodiment of the present invention having the above-described physical properties and configurational characteristics may be prepared through continuous solution polymerization reaction for polymerizing an olefin-based monomer by injecting a hydrogen gas in the presence of a metallocene catalyst composition including one or more types of transition metal compounds in a single reactor. Accordingly, in the olefin-based polymer according to an embodiment of the present invention, a block composed by linearly connecting two or more repeating units derived from any one monomer among monomers constituting a polymer is not formed in the polymer. That is, the olefin-based polymer according to the present invention may not include a block copolymer, but may be selected from the group consisting of a random copolymer, an alternating copolymer and a graft copolymer, more particularly, a random copolymer.

In an embodiment of the present invention, the injection amount of the hydrogen gas may be 0.35 to 3 parts by weight, particularly, 0.4 to 2 parts by weight, more particularly, 0.45 to 1.5 parts by weight based on 1 part by weight of an olefin-based monomer injected into a reaction system. In addition, in an embodiment of the present invention, if the olefin-based polymer is polymerized by continuous solution polymerization, the hydrogen gas may be injected in an amount of 0.35 to 3 kg/h, particularly, 0.4 to 2 kg/h, more particularly, 0.45 to 1.5 kg/h based on 1 kg/h of the olefin-based monomer injected into a reaction system.

In addition, the hydrogen gas may be injected in an amount of 0.8 to 3 parts by weight, particularly, 0.9 to 2.8 parts by weight, more particularly, 1 to 2.7 parts by weight based on 1 part by weight of ethylene. In addition, in an embodiment of the present invention wherein the olefin-based polymer is polymerized by continuous solution polymerization, the hydrogen gas may be injected into a reaction system in an amount of 0.8 to 3 kg/h, particularly, 0.9 to 2.8 kg/h, more particularly, 1 to 2.7 kg/h based on 1 kg/h of ethylene.

If polymerization is performed under conditions of injecting the above-described amount range of the hydrogen gas, the olefin-based polymer of the present invention may satisfy the above-described physical properties.

Particularly, the olefin-based copolymer of the present invention may be obtained by a preparation method including a step of polymerizing an olefin-based monomer by injecting a hydrogen gas in the presence of a catalyst composition for polymerizing olefin, including a transition metal compound of Formula 1 below.

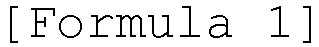

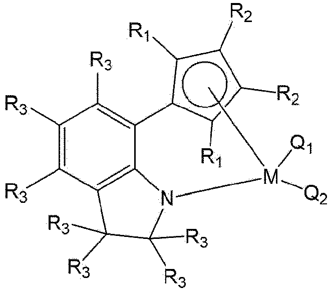

In Formula 1,
R₁ and R₂ groups are the same or different and each independently hydrogen or alkyl of 1 to 20 carbon atoms;
R₃ groups are the same or different and each independently hydrogen; halogen; or alkyl of 1 to 20 carbon atoms;
M is Ti; and
Q₁ and Q₂ are each independently halogen or alkyl of 1 to 20 carbon atoms.

The transition metal compound represented by Formula 1 has characteristics in which a metal site is connected by a cyclopentadienyl (Cp) ligand introducing tetrahydroquinoline, and a narrow Cp-M-N angle and a wide Q₁-M-Q₂ (Q₃-M-Q₄) angle to which a monomer goes near, are maintained. In addition, according to the bonding of a ring type, Cp, tetrahydroquinoline, nitrogen and a metal site are connected in order, and more stable and rigid five-member ring structure is formed. Accordingly, in case of activating such compounds by reacting with a co-catalyst such as methylaluminoxane and B(C₆F₅)₃ and then, applying thereof to olefin polymerization, the polymerization of an olefin-based polymer having the characteristics of high activity, high molecular weight and high copolymerization properties may be achieved even at a high polymerization temperature.

Each substituent defined in the present disclosure will be explained in detail as follows.

The term "halogen" used in the present disclosure means fluorine, chlorine, bromine or iodine, unless otherwise referred to.

The term "alkyl" used in the present disclosure means a hydrocarbon residual group of a linear chain or branched chain, unless otherwise referred to.

The compound of Formula 1 may be Formula 1-1 below, without limitation.

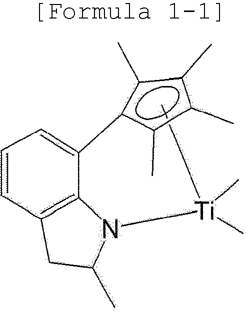

Besides, the compound may have various structures within the range defined in Formula 1.

The transition metal compound of Formula 1 may introduce a large amount of alpha-olefin as well as low-density polyethylene due to the structural characteristics of a catalyst, and a low-density polyolefin copolymer with a degree of 0.850 g/cc to 0.890 g/cc may be prepared.

The transition metal compound of Formula 1 may be prepared by, for example, a method below.

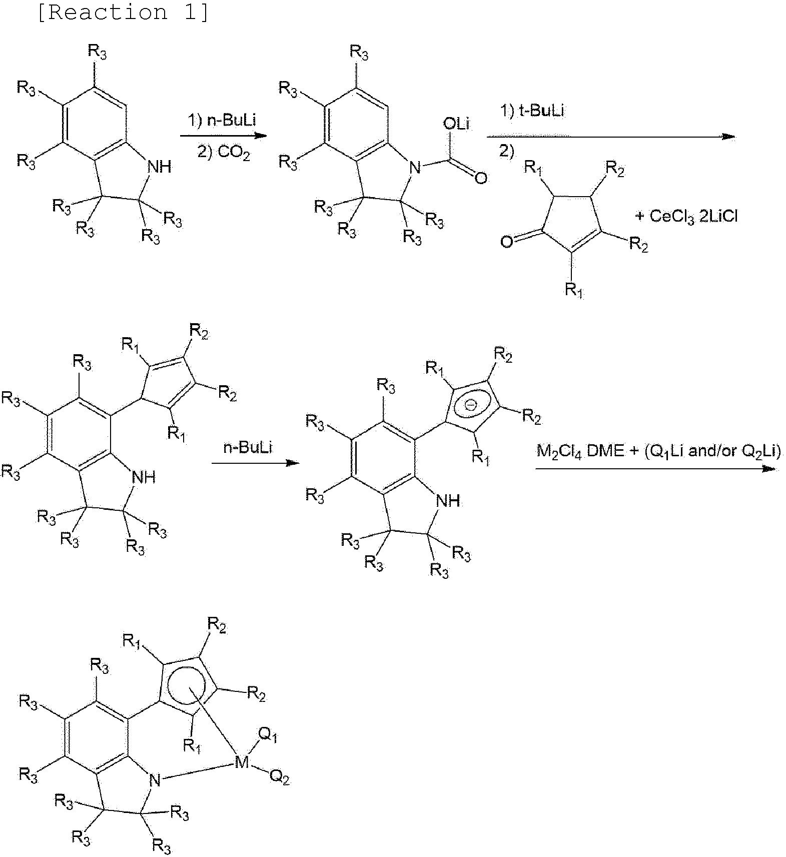

In Reaction 1, R₁ to R₃, M, Q₁ and Q₂ are the same as defined in Formula 1.

Formula 1 may be prepared by a method disclosed in Patent Laid-open No. 2007-0003071.

The transition metal compound of Formula 1 may be used as a catalyst of polymerization reaction as a composition type additionally including one or more among the co-catalyst compounds represented by Formula 2, Formula 3, and Formula 4 below.

[Formula 2] - [Al(R₄)-O]ₐ-

[Formula 3] A(R₄)₃

[Formula 4] [L-H]⁺[W(D)₄]⁻ or [L]⁺[W(D)₄]⁻

In Formulae 2 to 3,
R₄ groups may be the same or different from each other and each independently selected from the group consisting of halogen, hydrocarbyl of 1 to 20 carbon atoms, and halogen-substituted hydrocarbyl of 1 to 20 carbon atoms,
A is aluminum or boron,
D groups are each independently aryl of 6 to 20 carbon atoms or alkyl of 1 to 20 carbon atoms, of which one or more hydrogen atoms may be substituted with substituents, wherein the substituent is at least any one selected from the group consisting of halogen, hydrocarbyl of 1 to 20 carbon atoms, alkoxy of 1 to 20 carbon atoms and aryloxy of 6 to 20 carbon atoms,
H is a hydrogen atom,
L is a neutral or cationic Lewis acid,
W is an element in group 13, and
a is an integer of 2 or more.

Examples of the compound represented by Formula 2 may include alkylaluminoxane such as methylaluminoxane (MAO), ethylaluminoxane, isobutylaluminoxane and butylalminoxane, and a modified alkylaluminoxane obtained by mixing two or more types of the alkylaluminoxane, particularly, methylaluminoxane, modified methylaluminoxane (MMAO).

Examples of the compound represented by Formula 3 may include trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolylaluminum, dimethylaluminummethoxide, dimethylaluminumethoxide, trimethylboron, triethylboron, triisobutylboron, tripropylboron, tributylboron, etc. and particularly, may be selected from trimethylaluminum, triethylaluminum and triisobutylaluminum.

Examples of the compound represented by Formula 4 may include triethylammoniumtetraphenylboron, tributylammoniumtetraphenylboron, trimethylammoniumtetraphenylboron, tripropylammoniumtetraphenylboron, trimethylammoniumtetra(p-tolyl)boron, trimethylammoniumtetra(o,p-dimethylphenyl)boron, tributylammoniumtetra(p-trifluoromethylphenyl)boron, trimethylammoniumtetra(p-trifluoromethylphenyl)boron, tributylammoniumtetrapentafluorophenylboron, N,N-diethylaniliumtetraphenylboron, N,N-diethylaniliumtetrapentafluorophenylboron, diethylammoniumtetrapentafluorophenylboron, triphenylphosphoniumtetraphenylboron, trimethylphosphoniumtetraphenylboron, dimethylanilium tetrakis(pentafluorophenyl) borate, triethylammoniumtetraphenylaluminum, tributylammoniumtetraphenylaluminum, trimethylammoniumtetraphenylaluminum, tripropylammoniumtetraphenylaluminum, trimethylammoniumtetra (p-tolyl) aluminum, tripropylammoniumtetra (p-tolyl) aluminum, triethylammoniumtetra(o,p-dimethylphenyl)aluminum, tributylammoniumtetra(p-trifluoromethylphenyl)aluminum, trimethylammoniumtetra(p-trifluoromethylphenyl)aluminum, tributylammoniumtetrapentafluorophenylaluminum, N,N-diethylaniliniumtetraphenylaluminum, N,N-diethylaniliumtetrapentafluorophenylaluminum, diethylammoniumtetrapentafluorotetraphenylaluminum, triphenylphosphoniumtetraphenylaluminum, trimethylphosphoniumtetraphenylaluminum, tripropylammoniumtetra(p-tolyl)boron, triethylammoniumtetra(o,p-dimethylphenyl)boron, triphenylcarboniumtetra(p-trifluoromethylphenyl)boron, or triphenylcarboniumtetrapentafluorophenylboron.

The catalyst composition may be prepared by, as a first method, a preparation method including a step of obtaining a mixture by contacting the transition metal compound represented by Formula 1 with the compound represented by Formula 2 or Formula 3; and a step of adding the compound represented by Formula 4 to the mixture.

In addition, the catalyst composition may be prepared by, as a second method, a method of making contacting of the transition metal compound represented by Formula 1 with the compound represented by Formula 4.

In the first method in the preparation method of the catalyst composition, the molar ratio of the transition metal compound represented by Formula 1 and the transition metal compound represented by Formula 2/the compound represented by Formula 2 or Formula 3 may be 1/5,000 to 1/2, particularly, 1/1,000 to 1/10, more particularly, 1/500 to 1/20. If the molar ratio of the transition metal compound represented by Formula 1/the compound represented by Formula 2 or Formula 3 is greater than 1/2, the amount of an alkylating agent is too small, and the alkylation of a metal compound may be incompletely carried out, and if the molar ratio is less than 1/5,000, the alkylation of the metal compound may be achieved, but the activation of the alkylated metal compound may be incompletely carried out due to the side reactions between an excessive amount of the alkylating agent remained and an activating agent which is the compound of Formula 4. In addition, the molar ratio of the transition metal compound represented by Formula 1/the compound represented by Formula 4 may be 1/25 to 1, particularly, 1/10 to 1, more particularly, 1/5 to 1. If the molar ratio of the transition metal compound represented by Formula 1/the compound represented by Formula 4 is greater than 1, the amount of an activating agent is relatively small, and the activation of the metal compound may be incompletely carried out, and thus, the activity of the catalyst composition may be deteriorated. If the molar ratio is less than 1/25, the activation of the metal compound may be completely carried out, but due to the excessive amount of the activating agent remained, it would not be economical considering the unit cost of the catalyst composition, or the purity of a polymer produced may be degraded.

In the second method in the preparation method of the catalyst composition, the molar ratio of the transition metal compound represented by Formula 1/the compound represented by Formula 4 may be 1/10,000 to 1/10, particularly, 1/5,000 to 1/100, more particularly, 1/3,000 to 1/500. If the molar ratio is greater than 1/10, the amount of an activating agent is relatively small, and the activation of the metal compound may be incompletely carried out, and the activity of the catalyst composition thus produced may be degraded. If the molar ratio is less than 1/10,000, the activation of the metal compound may be completely carried out, but due to the excessive amount of the activating agent remained, it would not be economical considering the unit cost of the catalyst composition, or the purity of a polymer produced may be degraded.

As the reaction solvent during preparing the catalyst composition, a hydrocarbon-based solvent such as pentane, hexane, and heptane, or an aromatic solvent such as benzene and toluene may be used.

In addition, the catalyst composition may include the transition metal compound and the co-catalyst compound in a supported type on a support.

Any supports used in a metallocene-based catalyst may be used as the support without specific limitation. Particularly, the support may be silica, silica-alumina or silica-magnesia, and any one among them or mixtures of two or more thereof may be used.

In case where the support is silica among them, since a silica support and the functional group of the metallocene compound of Formula 1 may form a chemical bond, there is no catalyst separated from the surface during an olefin polymerization process. As a result, the generation of fouling, by which polymer particles are agglomerated on the wall side of a reactor or from each other during the preparation process of an olefin-based copolymer, may be prevented. In addition, the particle shape and apparent density of a polymer of the olefin-based copolymer prepared in the presence of a catalyst including the silica support are excellent.

More particularly, the support may be silica or silica-alumina, including a highly reactive siloxane group and dried at a high temperature through a method of drying at a high temperature, etc.

The support may further include an oxide, a carbonate, a sulfate, or a nitrate component such as Na₂O, K₂CO₃, BaSO₄ and Mg(NO₃)₂.

The polymerization reaction for polymerizing the olefin-based monomer may be achieved by a common process applied to the polymerization of an olefin monomer such as continuous solution polymerization, bulk polymerization, suspension polymerization, slurry polymerization and emulsion polymerization.

The polymerization reaction of the olefin monomer may be performed in an inert solvent, and as the inert solvent, benzene, toluene, xylene, cumene, heptane, cyclohexane, methylcyclohexane, methylcyclopentane, n-hexane, 1-hexene, and 1-octene may be used, without limitation.

The polymerization of the olefin-based polymer may be performed at a temperature of about 25°C to about 500°C, particularly, at a temperature of 80°C to 250°C, more preferably, 100°C to 200°C. In addition, the reaction pressure during the polymerization may be 1 kgf/cm² to 150 kgf/cm², preferably, 1 kgf/cm² to 120 kgf/cm², more preferably, 5 kgf/cm² to 100 kgf/cm².

The olefin-based polymer of the present invention has improved physical properties, and accordingly, may be useful for hollow molding, extrusion molding or injecting molding in various fields and uses for packing, construction, household items, etc. including materials for cars, wires, toys, fibers, and medical, and particularly, useful for cars requiring excellent impact strength.

In addition, the olefin-based polymer of the present invention may be usefully used for the manufacture of a molded article.

The molded article may be a blow molding molded article, an inflation molded article, a cast molded article, an extrusion laminate molded article, an extrusion molded article, a foam molded article, an injection molded article, a sheet, a film, a fiber, a monofilament, a nonwoven fabric, etc.

### MODE FOR CARRYING OUT THE INVENTION

### Examples

### Preparation Example 1: Preparation of transition metal compound A

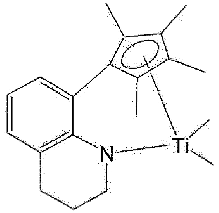

### (1) Preparation of 8-(2,3,4,5-tetramethyl-1,3-cyclopentadienyl)-1,2,3,4-tetrahydroquinoline

### (i) Preparation of lithium carbamate

1,2,3,4-tetrahydroquinoline (13.08 g, 98.24 mmol) and diethyl ether (150 mL) were put in a shlenk flask. Into a low-temperature bath of -78°C obtained by dry ice and acetone, the shlenk flask was immersed and stirred for 30 minutes. Then, n-BuLi (39.9 mL, 2.5 M, 98.24 mmol) was injected under a nitrogen atmosphere via a syringe, and a light yellow slurry was formed. Then, the flask was stirred for 2 hours, and the temperature of the flask was elevated to room temperature while removing a butane gas produced. The flask was immersed again into the low-temperature bath of -78°C to reduce the temperature, and a CO₂ gas was injected. According to the injection of the carbon dioxide gas, the slurry disappeared into a transparent solution. The flask was connected with a bubbler, and the temperature was elevated to room temperature while removing the carbon dioxide gas. After that, remaining CO₂ gas and solvents were removed under vacuum. After transporting the flask to a dry box, pentane was added thereto, followed by vigorous stirring and filtering to obtain lithium carbamate as a white solid compound. In the white solid compound, diethyl ether made a coordination bond. In this case, the yield was 100%.

¹H NMR(C₆D₆, C₅D₅N) : δ 1.90 (t, J = 7.2 Hz, 6H, ether), 1.50 (br s, 2H, quin-CH₂), 2.34 (br s, 2H, quin-CH₂), 3.25 (q, J = 7.2 Hz, 4H, ether), 3.87 (br, s, 2H, quin-CH₂), 6.76 (br d, J = 5.6 Hz, 1H, quin-CH) ppm

¹³C NMR (C₆D₆) : δ 24.24, 28.54, 45.37, 65.95, 121.17, 125.34, 125.57, 142.04, 163.09(C=O) ppm

### (ii) Preparation of 8-(2,3,4,5-tetramethyl-1,3-cyclopentadienyl)-1,2,3,4-tetrahydroquinoline

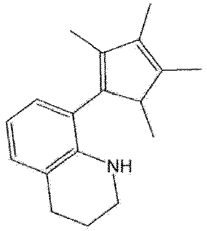

The lithium carbamate compound (8.47 g, 42.60 mmol) prepared in step (i) above was put in a shlenk flask. Then, tetrahydrofuran (4.6 g, 63.9 mmol) and 45 mL of diethyl ether were added thereto in order. Into a low-temperature bath of -20°C obtained by acetone and a small amount of dry ice, the shlenk flask was immersed and stirred for 30 minutes, and n-BuLi (25.1 mL, 1.7 M, 42.60 mmol) was injected. In this case, the color of the reaction mixture was changed into red. While continuously maintaining -20°C, stirring was performed for 6 hours. A CeCl₃·2LiCl solution (129 mL, 0.33 M, 42.60 mmol) dissolved in tetrahydrofuran and tetramethylcyclopentanone (5.89 g, 42.60 mmol) were mixed in a syringe and then injected into the flask under a nitrogen atmosphere. In the middle of slowly elevating the temperature of the flask to room temperature, a thermostat was removed after 1 hour, and the temperature was maintained to room temperature. Then, water (15 mL) was added to the flask, and ethyl acetate was put, followed filtering to obtain a filtrate. The filtrate was transported to a separating funnel, and hydrochloric acid (2 N, 80 mL) was added thereto, followed by shaking for 12 minutes. Then, a saturated sodium bicarbonate solution (160 mL) was added to neutralize, and an organic layer was extracted. To the organic layer, anhydrous magnesium sulfate was put to remove moisture, and filtering was conducted. The filtrate was taken, and solvents were removed. The filtrate thus obtained was separated by a column chromatography method using a solvent of hexane and ethyl acetate (v/v, 10:1) to obtain a yellow oil. The yield was 40%.

¹H NMR(C₆D₆) : δ 1.00 (br d, 3H, Cp-CH₃), 1.63 - 1.73 (m, 2H, quin-CH₂), 1.80 (s, 3H, Cp-CH₃), 1.81 (s, 3H, Cp-CH₃), 1.85 (s, 3H, Cp-CH₃), 2.64 (t, J = 6.0 Hz, 2H, quin-CH₂), 2.84 - 2.90 (br, 2H, quin-CH₂), 3.06 (br s, 1H, Cp-H), 3.76 (br s, 1H, N-H), 6.77 (t, J = 7.2 Hz, 1H, quin-CH), 6.92 (d, J = 2.4 Hz, 1H, quin-CH), 6.94 (d, J = 2.4 Hz, 1H, quin-CH) ppm

### (2) Preparation of [(1,2,3,4-tetrahydroquinolin-8-yl)tetramethylcyclopentadienyl-η⁵,κ-N]titanium dimethyl

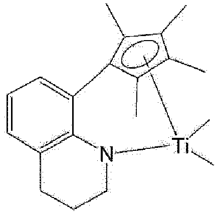

### (i) Preparation of [(1,2,3,4-tetrahydroquinoline-8-yl)tetramethylcyclopentadienyl-η⁵,κ-N]dilithium compound

In a dry box, 8-(2,3,4,5-tetramethyl-1,3-cyclopentadienyl)-1,2,3,4-tetrahydroquinoline (8.07 g, 32.0 mmol) prepared through step (1) above, and 140 mL of diethyl ether were put in a round flask, the temperature was reduced to -30°C, and n-BuLi (17.7 g, 2.5 M, 64.0 mmol) was slowly added while stirring. The reaction was performed for 6 hours while elevating the temperature to room temperature. After that, washing with diethyl ether was conducted several times, and filtering was conducted to obtain a solid. Remaining solvents were removed by applying vacuum to obtain a dilithium compound (9.83 g) as a yellow solid. The yield was 95%.

¹H NMR(C₆D₆, C₅D₅N) : δ 2.38 (br s, 2H, quin-CH₂), 2.53 (br s, 12H, Cp-CH₃), 3.48 (br s, 2H, quin-CH₂), 4.19 (br s, 2H, quin-CH₂), 6.77 (t, J = 6.8 Hz, 2H, quin-CH), 7.28 (br s, 1H, quin-CH), 7.75 (brs, 1H, quin-CH) ppm

### (ii) Preparation of (1,2,3,4-tetrahydroquinolin-8-yl)tetramethylcyclopentadienyl-η⁵,κ-N]titanium dimethyl

In a dry box, TiCl₄·DME (4.41 g, 15.76 mmol) and diethyl ether (150 mL) were put in a round flask, and while stirring at -30°C, MeLi (21.7 mL, 31.52 mmol, 1.4 M) was slowly added. After stirring for 15 minutes, the (1,2,3,4-tetrahydroquinolin-8-yl)tetramethylcyclopentadienyl-*ηη*⁵,*κ-*N]dilithium compound (5.30 g, 15.78 mmol) prepared in step (i) above was put in the flask. While elevating the temperature to room temperature, stirring was conducted for 3 hours. After finishing the reaction, vacuum was applied to remove solvents, and the resultant residue was dissolved in pentane and filtered, and the filtrate was taken. By removing pentane by applying vacuum, a dark brown compound (3.70 g) was obtained. The yield was 71.3%.

¹H NMR(C₆D₆) : δ 0.59 (s, 6H, Ti-CH₃), 1.66 (s, 6H, Cp-CH₃), 1.69 (br t, J = 6.4 Hz, 2H, quin-CH₂), 2.05 (s, 6H, Cp-CH₃), 2.47 (t, J = 6.0 Hz, 2H, quin-CH₂), 4.53 (m, 2H, quin-CH₂), 6.84 (t, J = 7.2 Hz, 1H, quin-CH), 6.93 (d, J =7.6 Hz, quin-CH), 7.01 (d, J =6.8 Hz, quin-CH) ppm

¹³C NMR(C₆D₆) : δ 12.12, 23.08, 27.30, 48.84, 51.01, 119.70, 119.96, 120.95, 126.99, 128.73, 131.67, 136.21 ppm

### Preparation Example 2: Preparation of transition metal compound B

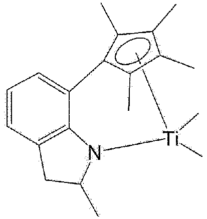

### (1) Preparation of 2-methyl-7-(2,3,4,5-tetramethyl-1,3-cyclopentadienyl)indoline

2-methyl-7-(2,3,4,5-tetramethyl-1,3-cyclopentadienyl)indoline was prepared through the same method as in (1) in Preparation Example 1 except for using 2-methylindoline instead of 1,2,3,4-tetrahydroquinoline in (1) of Preparation Example 1. The yield was 19%.

¹H NMR(C₆D₆) : δ 6.97 (d, J=7.2Hz, 1H, CH), δ 6.78 (d, J=8Hz, 1H, CH), δ 6.67 (t, J=7.4Hz, 1H, CH), δ 3.94 (m, 1H, quinoline-CH), δ 3.51 (br s, 1H, NH), δ 3.24-3.08(m, 2H, quinoline-CH₂, Cp-CH), δ 2.65(m, 1H, quinoline-CH²), δ 1.89(s, 3H, Cp-CH₃), δ 1.84 (s, 3H, Cp-CH₃), δ 1.82(s, 3H, Cp-CH₃), δ 1.13(d, J=6Hz, 3H, quinoline-CH₃), δ 0.93(3H, Cp-CH₃) ppm.

### (2) Preparation of [(2-Methylindolin-7-yl)tetramethylcyclopentadienyl-eta5,kapa-N]titanium dimethyl

(i) A dilithium salt compound (compound 4 g) coordinated with 0.58 equivalent of diethyl ether was obtained (1.37 g, 50%) through the same method as in (2) (i) in Preparation Example 1 except for using 2-methyl-7-(2,3,4,5-tetramethyl-1,3-cyclopentadienyl)-indoline (2.25 g, 8.88 mmol) instead of 8-(2,3,4,5-tetramethyl-1,3-cyclopentadienyl)-1,2,3,4-tetrahydroquinoline.
   ¹H NMR(Pyridine-d8) : δ 7.22 (br s, 1H, CH), δ 7.18 (d, J=6Hz, 1H, CH), δ 6.32 (t, 1H, CH), δ 4.61 (brs, 1H, CH), δ 3.54 (m, 1H, CH), δ 3.00 (m, 1H, CH), δ 2.35-2.12 (m, 13H, CH, Cp-CH3), δ 1.39(d, indoline-CH3) ppm.
(ii) A titanium compound was prepared through the same method as in (2) (ii) in Preparation Example 1 using the dilithium salt compound (compound 4 g) (1.37 g, 4.44 mmol) prepared in (i) above.

¹H NMR(C₆D₆): δ 7.01-6.96(m, 2H, CH), δ 6.82(t, J=7.4Hz, 1H, CH),
δ 4.96 (m, 1H, CH), δ 2.88 (m, 1H, CH), δ 2.40 (m, 1H, CH), δ 2.02 (s, 3H, Cp-CH₃), δ 2.01 (s, 3H, Cp-CH₃), δ 1.70 (s, 3H, Cp-CH₃), δ 1.69(s, 3H, Cp-CH₃), δ 1.65(d, J=6.4Hz, 3H, indoline-CH₃), δ 0.71(d, J=10Hz, 6H, TiMe₂-CH₃) ppm.

### Example 1

To a 1.5 L continuous process reactor, a hexane solvent (5 kg/h) and 1-butene (0.95 kg/h) were charged, and the temperature of the top of the reactor was pre-heated to 140.7°C. A triisobutylaluminum compound (0.06 mmol/min), the transition metal compound B (0.40 µmol/min) obtained in Preparation Example 2, and a dimethylanilinium tetrakis(pentafluorophenyl) borate co-catalyst (1.20 µmol/min) were injected at the same time into the reactor. Then, a hydrogen gas (15 cc/min) and ethylene (0.87 kg/h) were injected into the reactor, and copolymerization reaction was performed by maintaining 141°C for 30 minutes or more in a continuous process with a pressure of 89 bar to obtain a copolymer. After drying in a vacuum oven for 12 hours or more, physical properties were measured.

### Examples 2 to 5

Copolymers were obtained by performing the same copolymerization reaction as in Example 1 except for changing the amount used of a transition metal compound, the amounts used of a catalyst and a co-catalyst, the reaction temperature, the injection amount of hydrogen and the amount of a comonomer as in Table 1 below.

### Comparative Example 1

DF610 of Mitsui Chemicals Inc. was purchased and used.

### Comparative Examples 2 to 4

Copolymers were obtained by performing the same copolymerization reaction as in Example 1 except for changing the type of a transition metal compound, the amount used of a transition metal compound, the amounts used of a catalyst and a co-catalyst, the reaction temperature, the injection amount of hydrogen and the amount of a comonomer as in Table 1 below.

### Comparative Example 5

DF710 of Mitsui Chemicals Inc. was purchased and used.

### Comparative Example 6

DF640 of Mitsui Chemicals Inc. was purchased and used.

### Comparative Example 7

EG7447 of Dow Co. was purchased and used.

**[Table 1]**

| | Catalyst type | Catalyst amount used (µmol/min) | Co-cat. (µmol/mi n) | TiBAl (mmol/m in) | Ethyle ne (kg/h) | Hexan e (Kg/h ) | 1-butene (kg/h) | Hydrog en (cc/mi n) | Reacti on temp. (°C) |
|---|---|---|---|---|---|---|---|---|---|
| Example 1 | Transition metal compound B | 0.40 | 1.20 | 0.06 | 0.87 | 5 | 0.95 | 15 | 141 |
| Example 2 | Transition metal compound B | 0.60 | 1.80 | 0.05 | 0.87 | 7 | 0.93 | 32 | 145 |
| Example 3 | Transition metal compound B | 0.45 | 1.35 | 0.04 | 0.87 | 7 | 0.75 | 15 | 145 |
| Example 4 | Transition metal compound B | 0.74 | 2.22 | 0.05 | 0.87 | 7 | 0.93 | 25 | 150 |
| Example 5 | Transition metal compound B | 0.55 | 1.65 | 0.04 | 0.87 | 7 | 0.84 | 38 | 148 |
| Comparative Example 2 | Transition metal compound B | 0.78 | 2.34 | 0.06 | 0.87 | 5 | 1.15 | - | 161 |
| Comparative Example 3 | Transition metal compound A | 0.32 | 0.96 | 0.05 | 0.87 | 5 | 0.62 | - | 145 |
| Comparative Example 4 | Transition metal compound B | 0.50 | 1.50 | 0.06 | 0.87 | 5 | 1.15 | 10 | 161 |

### Experimental Example 1

With respect to the copolymers of Examples 1 to 5, and Comparative Examples 1 to 4, physical properties were evaluated according to the methods below and are shown in Tables 2 and 3 below.

### 1) Density of polymer

Measurement was conducted according to ASTM D-792.

### 2) Melt index (MI) of polymer

Measurement was conducted according to ASTM D-1238 (condition E, 190°C, 2.16 kg load).

### 3) Weight average molecular weight (Mw, g/mol) and molecular weight distribution (MWD)

A number average molecular weight (Mn) and a weight average molecular weight (Mw) were measured respectively, using gel permeation chromatography (GPC), and molecular weight distribution was calculated through dividing the weight average molecular weight by the number average molecular weight.
- Column: PL Olexis
- Solvent: trichlorobenzene (TCB)
- Flow rate: 1.0 ml/min
- Specimen concentration: 1.0 mg/ml
- Injection amount: 200 µl
- Column temperature: 160°C
- Detector: Agilent High Temperature RI detector
- Standard: Polystyrene (calibrated by cubic function)

### 4) Melting temperature (Tm) of polymer

The melting temperature was obtained using a differential scanning calorimeter (DSC: differential scanning calorimeter 250) manufactured by TA instrument Co. That is, the temperature was elevated to 150°C, kept for 1 minute, and reduced to -100°C, and then, the temperature was elevated again. The apex of a DSC curve was set to the melting point. In this case, the elevating rate and reducing rate of the temperature were controlled to 10°C/min, and the melting temperature was obtained during the second elevation of the temperature.

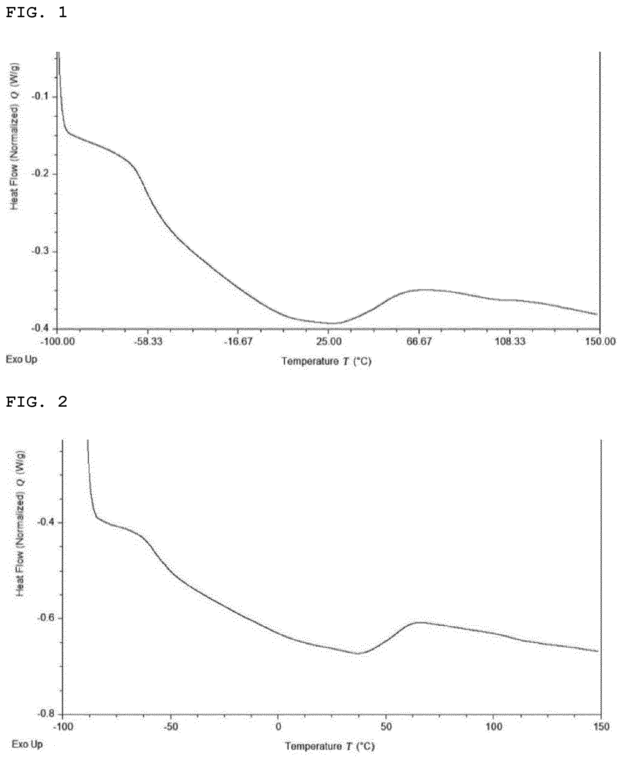

The DSC graph of the polymer of Example 1 is shown in FIG. 1, and the DSC graph of the polymer of Comparative Example 1 is shown in FIG. 2.

### 5) High temperature melting peak of polymer and T(95), T(90) and T(50)

Measurement was conducted by using a differential scanning calorimeter (DSC: differential scanning calorimeter 250) manufactured by TA instrument Co. and by a successive self-nucleation/annealing (SSA) measurement method.

Particularly, in the first cycle, the temperature was elevated to 150°C, kept for 1 minute, and reduced to -100°C. In the second cycle, the temperature was elevated to 120°C, kept for 30 minutes, and reduced to -100°C. In the third cycle, the temperature was elevated to 110°C, kept for 30 minutes, and reduced to -100°C. As described above, a process of elevating the temperature and decreasing to -100°C by an interval of 10°C was repeated to -60°C so as to crystallize in each temperature section.

In the last cycle, the temperature was elevated to 150°C, and heat capacity was measured. Then, the enthalpies of fusion at 75°C or more were combined to obtain ΔH(75).

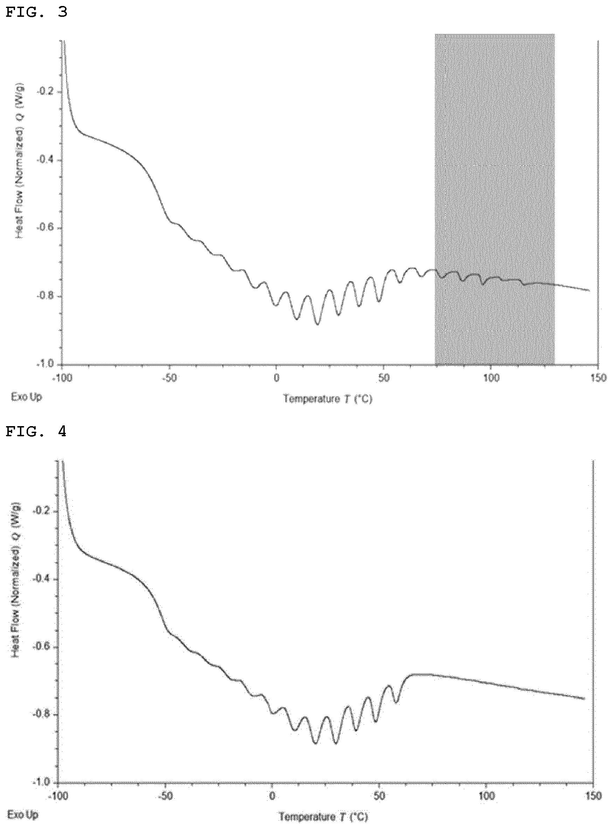

FIG. 3 shows an SSA graph of the polymer of Example 1, and FIG. 4 shows an SSA graph of the polymer of Comparative Example 1.

### 6) Hardness (shore A)

Hardness was measured according to the standard of ASTM D2240 using GC610 STAND for durometer of TECLOCK Co. and a shore durometer Type A of Mitutoyo Co.

### 7) Tensile strength and tearing strength of polymer

The olefin-based copolymers of Example 1 and Comparative Examples 1 to 3 were extruded to manufacture pallet shapes, and tensile strength and tearing strength when broken were measured according to ASTM D638 (50 mm/min).

**[Table 2]**

| | Density (g/mL) | MI (g/10 min) | Mw (g/mol) | MWD | DSC | SSA | |
|---|---|---|---|---|---|---|---|
| | | | | | Tm (°C) | The existence of high temperature melting peak | ΔH(75) (J/g) |
| Example 1 | 0.862 | 1.20 | 106,000 | 2.01 | 32.1 | Exist | 1.04 |
| Example 2 | 0.866 | 4.39 | 69,070 | 2.07 | 33.0 | Exist | 1.61 |
| Example 3 | 0.872 | 1. 22 | 99,068 | 2.05 | 45.9 | Exist | 1.11 |
| Example 4 | 0.866 | 3.30 | 70,000 | 2.11 | 37.8 | Exist | 1.05 |
| Example 5 | 0.865 | 5.10 | 75,388 | 2.09 | 37.2 | Exist | 1.12 |
| Comparative Example 1 | 0.861 | 1.32 | 105,000 | 1.98 | 39.7 | None | 0 |
| Comparative Example 2 | 0.861 | 1.12 | 102,000 | 2.11 | 28.6 | Exist | 0.71 |
| Comparative Example 3 | 0.862 | 1.20 | 91,419 | 2.18 | 28.5 | Exist | 0.56 |
| Comparative Example 4 | 0.862 | 1. 23 | 100, 423 | 2.185 | 29.9 | Exist | 0.61 |
| Comparative Example 5 | 0.869 | 1.20 | 92,000 | 2.04 | 49.3 | None | 0 |
| Comparative Example 6 | 0.865 | 3.40 | 71,000 | 2.04 | 43.8 | None | 0 |
| Comparative Example 7 | 0.868 | 5.10 | 76,735 | 2.14 | 44.2 | None | 0.48 |

**[Table 3]**

| | Density (g/mL) | MI (g/10 min) | MWD | DSC Tm (°C) | SSA ΔH(75) (J/g) | Tensile strength | Tearing strength | Hardness (Shore A) |
|---|---|---|---|---|---|---|---|---|
| Example 1 | 0.862 | 1.20 | 2.01 | 32.1 | 1.04 | 2.2 | 29.5 | 55.0 |
| Comparative Example 1 | 0.861 | 1.32 | 1.98 | 39.7 | 0 | 2.1 | 25.6 | 56.7 |
| Comparative Example 2 | 0.861 | 1.12 | 2.11 | 28.6 | 0.71 | 1.6 | 22.4 | 52.9 |
| Comparative Example 3 | 0.862 | 1.20 | 2.18 | 28.5 | 0.56 | 1.3 | 16.7 | 51.6 |

When comparing Example 1 and Comparative Example 1 having the equivalent degrees of density and MI, FIG. 1 and

FIG. 2 measured by DSC showed analogical tendency and similar graph types, and no significant difference was confirmed. However, in FIG. 3 and FIG. 4 measured by SSA, it could be confirmed that there was a significant difference in a high temperature region of 75°C or more. Particularly, Example 1 showed peaks at 75°C or more, but the Comparative Example did not show. Comparative Example 2 and Comparative Example 3 showed peaks in the corresponding region, but the sizes were small when compared with the Example. Due to such a difference of the high temperature melting peaks measured by SSA, Example 1 showed a ΔH(75) value of 1.0 J/g or more, but the Comparative Examples showed ΔH(75) values of less than 1.0 J/g or no peaks in a corresponding region.

Through Table 3, the mechanical strength of Example 1 and Comparative Examples 1, 2, and 3, having equivalent degrees of density and MI may be compared. It could be found that Example 1 introduced a polymer melted at a high temperature and showed increased mechanical rigidity, and thus, attained increased tensile strength and tearing strength when compared with Comparative Examples 1 to 3.

Examples 1 to 5 correspond to polymers obtained by polymerizing an olefin-based monomer by injecting a hydrogen gas and introducing a highly crystalline region. Accordingly, high temperature melting peaks were shown, and the ΔH(75) values of 1.0 J/g or more and high mechanical rigidity were shown. Through the comparison of Comparative Example 2 and Comparative Example 4, it could be confirmed that the satisfaction or dissatisfaction of the ΔH(75) value of 1.0 J/g or more and the mechanical rigidity were changed according to the injection or not and the injection amount of a hydrogen gas during polymerization.

In addition, if the olefin-based polymer of the present invention is included in a polypropylene-based composite, a polypropylene-based composite showing markedly improved impact strength properties together with excellent mechanical strength may be provided. Hereinafter, experiments on applying the olefin-based polymer of the present invention in a polypropylene-based composite are shown.

### Composite Preparation Example 1: Preparation of polypropylene-based composite

To 20 parts by weight of the olefin copolymer prepared in Example 1, 60 parts by weight of highly crystalline impact copolymer polypropylene (CB5230, Korea Petrochemical Industrial Co. Ltd.) having a melt index (230°C, 2.16 kg) of 30 g/10 min, and 20 parts by weight of talc (KCNAP-400^{™}, Coats Co.) (average particle diameter (D₅₀) = 11.0 µm) were added, and then, 0.1 parts by weight of AO1010 (Ciba Specialty Chemicals) as an antioxidant, 0.1 parts by weight of tris(2,4-di-tert-butylphenyl)phosphite (A0168), and 0.3 parts by weight of calcium stearate (Ca-St) were added. Then, the resultant mixture was melted and mulled using a twin screw extruder to prepare a polypropylene-based composite compound in a pellet shape. In this case, the twin screw extruder has a diameter of 25 Φ and a ratio of length to diameter of 40, and conditions were set to a barrel temperature of 200°C to 230°C, a screw rotation velocity of 250 rpm, and an extrusion rate of 25 kr/hr.

### Composite Preparation Examples 2 to 5: Preparation of polypropylene-based composites

Polypropylene-based composites were prepared by the same method as in Example 1 except for using the olefin copolymers shown in Table 4 below instead of the olefin copolymer prepared in Example 1. In this case, the type of polypropylene, and the ratio of olefin copolymer and polypropylene were changed in Example 5.

In Table 4 below, polypropylene represented by CB5290 is highly crystalline impact copolymer polypropylene (CB5290, Korea Petrochemical Industrial Co. Ltd.) having a melt index (230°C, 2.16 kg) of 90 g/10 min.

### Composite Comparative Preparation Examples 1 to 7: Preparation of polypropylene-based composites

Polypropylene-based composites were prepared by the same method as in Example 1 except for using the olefin copolymers shown in Table 4 below instead of the olefin copolymer prepared in Example Preparation Example 1. In this case, the type of polypropylene, and the ratio of olefin copolymer and polypropylene were changed in Comparative Example 7.

In Table 4 below, polypropylene represented by CB5290 is highly crystalline impact copolymer polypropylene (CB5290, Korea Petrochemical Industrial Co. Ltd.) having a melt index (230°C, 2.16 kg) of 90 g/10 min.

**[Table 4]**

| | Olefin-based polymer | polypropylene | Compounding ratio | | |
|---|---|---|---|---|---|
| | | | Olefin-based polymer (wt%) | PP (wt%) | Talc (wt%) |
| Composite Preparation Example 1 | Example 1 | CB5230 | 20 | 60 | 20 |
| Composite Preparation Example 2 | Example 3 | CB5230 | 20 | 60 | 20 |
| Composite Preparation Example 3 | Example 4 | CB5230 | 20 | 60 | 20 |
| Composite Preparation Example 4 | Example 5 | CB5230 | 20 | 60 | 20 |
| Composite Preparation Example 5 | Example 3 | CB5290 | 30 | 50 | 20 |
| Composite Comparative | Comparative | CB5230 | 20 | 60 | 20 |
| Preparation Example 1 | Example 1 | | | | |
| Composite Comparative Preparation Example 2 | Comparative Example 2 | CB5230 | 20 | 60 | 20 |
| Composite Comparative Preparation Example 3 | Comparative Example 3 | CB5230 | 20 | 60 | 20 |
| Composite Comparative Preparation Example 4 | Comparative Example 5 | CB5230 | 20 | 60 | 20 |
| Composite Comparative Preparation Example 5 | Comparative Example 6 | CB5230 | 20 | 60 | 20 |
| Composite Comparative Preparation Example 6 | Comparative Example 7 | CB5230 | 20 | 60 | 20 |
| Composite Comparative Preparation Example 7 | Comparative Example 5 | CB5290 | 30 | 50 | 20 |

### Experimental Example 2: Evaluation of physical properties of polypropylene-based composite

In order to confirm the physical properties of the polypropylene-based composites prepared in Composite Preparation Examples 1 to 5, and Composite Comparative Preparation Examples 1 to 7, specimens were manufactured by injection molding the polypropylene-based composites using an injection machine at a temperature of 230°C, and the specimens were stood in a constant temperature and humidity room for 1 day, and then, the specific gravity of polymers, the melt index of polymers, tensile strength, flexural strength and flexural modulus, impact strength at low temperature and room temperature, and contraction ratio were measured. The physical properties of the specimens thus manufactures are shown in Table 5 below.

### 1) Specific gravity

Measurement was conducted according to ASTM D792.

### 2) Melt index (M1) of polymer

The melt index (MI) of a polymer was measured according to ASTM D-1238 (condition E, 230°C, 2.16 kg load).

### 3) Tensile strength and flexural strength

Measurement was conducted using INSTRON 3365 apparatus according to ASTM D790.

### 4) Impact strength at low temperature and at room temperature

Measurement was conducted according to ASTM D256, impact strength at room temperature was measured under room temperature (23°C) conditions, and impact strength at low temperature was measured in a low-temperature chamber (-30°C) after standing for 12 hours or more.

**[Table 5]**

| | Specific gravity | MI (g/10 min) | Tensile strength | Flexural strength | Impact strength at low temperature | Impact strength at room temperature |
|---|---|---|---|---|---|---|
| Composite Preparation Example 1 | 1.033 | 14.3 | 211 | 341 | 4.7 | 42.1 |
| Composite Preparation Example 2 | 1.041 | 14.6 | 211 | 336 | 4.7 | 43.9 |
| Composite Preparation Example 3 | 1.030 | 13.9 | 206 | 334 | 4.8 | 42.5 |
| Composite Preparation Example 4 | 1.038 | 13.9 | 205 | 327 | 4.7 | 40.9 |
| Composite Preparation Example 5 | 1.037 | 14.6 | 219 | 344 | 3.6 | 34.5 |
| Composite Comparative Preparation Example 1 | 1.03 | 15.0 | 216 | 340 | 3.8 | 37.3 |
| Composite Comparative Preparation Example 2 | 1.032 | 17.0 | 239 | 336 | 3.8 | 34.8 |
| Composite Comparative Preparation Example 3 | 1.032 | 17.4 | 238 | 334 | 3.8 | 34.5 |
| Composite | 1.036 | 17.7 | 217 | 336 | 4.3 | 32.9 |
| Comparative Preparation Example 4 | | | | | | |
| Composite Comparative Preparation Example 5 | 1.031 | 17.8 | 217 | 333 | 4.4 | 33.1 |
| Composite Comparative Preparation Example 6 | 1.031 | 16.2 | 171 | 246 | 8.4 | 53.7 |
| Composite Comparative Preparation Example 7 | 1.033 | 16.7 | 168 | 241 | 9.0 | 52.8 |

Referring to Table 5, when comparing the polypropylene-based composites including olefin-based copolymers having equivalent degrees of density and MI values, it could be confirmed that the polypropylene-based composites including the olefin-based polymers of the Examples maintained similar degrees of impact strength at low temperature and impact strength at room temperature, and improved mechanical strength such as tensile strength and flexural strength when compared with the polypropylene-based composites including the olefin-based polymers of the Comparative Examples. Through this, it could be confirmed that the mechanical rigidity of a polypropylene-based composite may be improved by including an olefin-based copolymer introducing a highly crystalline region and showing high mechanical rigidity of the Example in a polypropylene-based composite.

## Claims

1. An olefin-based polymer satisfying the following conditions (1) to (4):
(1) a melt index MI, determined at 190°C under a load of 2.16 kg, is from 0.1 g/10 min to 10.0 g/10 min,
(2) a melting temperature, when measured by differential scanning calorimetry, is from 20°C to 70°C, and
(3) a high temperature melting peak is confirmed at 75°C to 150°C when measured by a differential scanning calorimetry precise measurement method (SSA), and a total enthalpy of fusion ΔH(75) of the corresponding region is 1.0 J/g or more, and
(4) a density (d) is from 0.850 g/cc to 0.890 g/cc;
wherein the olefin-based polymer is a copolymer of ethylene and any one selected from the group consisting of propylene, 1-butene, 1-pentene, 4-methyl-1-pentene, 1-hexene, 1-heptene, and 1-octene, or mixtures of two or more thereof;
wherein the measurement of a melting temperature (Tm) using differential scanning calorimetry is performed by a first cycle including heating to a temperature higher by 30°C than the melting temperature (Tm) at a constant rate, and cooling to a temperature lower by 30°C than a glass transition temperature (Tg) at a constant rate, and a second cycle to obtain the peak of a standard melting temperature (Tm), and wherein the differential scanning calorimetry precise measurement method (SSA) is a method of obtaining crystal information by undergoing a process of heating immediately before the peak of a melting temperature (Tm) and cooling after the first cycle using differential scanning calorimetry (DSC), and repeatedly performing heating to a temperature reduced by 5°C and cooling; and
wherein the density, the high temperature melting peak, and the total enthalpy of fusion ΔH(75) are determined in accordance with the methods described in the specification.

2. The olefin-based polymer according to claim 1, wherein the olefin-based polymer additionally satisfies the following condition: (5) a weight average molecular weight (Mw) is from 10,000 g/mol to 500,000 g/mol, determined in accordance with the method described in the specification.

3. The olefin-based polymer according to claim 1, wherein the olefin-based polymer additionally satisfies the following condition: (6) a molecular weight distribution (MWD) is from 1.0 to 6.0, determined in accordance with the method described in the specification.

4. The olefin-based polymer according to claim 1, wherein the melt index (MI) of the olefin-based polymer is 0.3 g/10 min to 9.0 g/10 min.

5. The olefin-based polymer according to claim 1, wherein the olefin-based polymer has a temperature range of 75°C to 150°C, at which the high temperature melting peak is confirmed when measured by the differential scanning calorimetry precise measurement method (SSA), and the total enthalpy of fusion ΔH(75) of the corresponding region is 1.0 J/g to 3.0 J/g.

6. The olefin-based polymer according to claim 1, wherein the olefin-based polymer is a copolymer of ethylene and 1-butene.

7. An olefin-based polymer according to claim 1, wherein:
a melt index (MI) is from 0.3 g/10 min to 9.0 g/10 min;
a temperature range at which a high temperature melting peak is confirmed when measured by a differential scanning calorimetry precise measurement method (SSA) is 75°C to 150°C, and a total enthalpy of fusion ΔH(75) of the corresponding region is 1.0 J/g to 3.0 J/g;
a weight average molecular weight (Mw) is from 10,000 to 500,000 g/mol;
a molecular weight distribution (MWD) is from 1.0 to 6.0; and
a melting temperature when measured by differential scanning calorimetry (DSC) is from 20°C to 60°C.

8. The olefin-based polymer according to claim 1, wherein the olefin-based polymer is an olefin-based polymer obtained by a preparation method comprising: polymerizing an olefin-based monomer by injecting a hydrogen gas in the presence of a catalyst composition for polymerizing olefin, the catalyst composition comprising a transition metal compound of the following Formula 1: 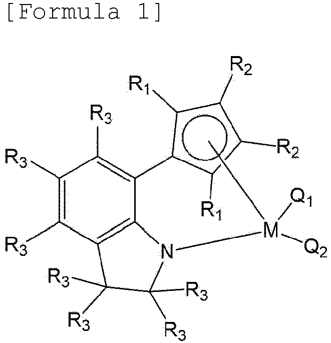 in Formula 1,
R₁ and R₂ groups are the same or different and each independently hydrogen or alkyl of 1 to 20 carbon atoms;
R₃ groups are the same or different and each independently hydrogen; halogen; or alkyl of 1 to 20 carbon atoms;
M is Ti; and
Q₁ and Q₂ are each independently halogen; or alkyl of 1 to 20 carbon atoms.

9. The olefin-based polymer according to claim 1, wherein the olefin-based polymer is prepared by continuous solution polymerization reaction using a continuous stirred tank reactor by injecting a hydrogen gas in the presence of a catalyst composition for polymerizing olefin.

10. The olefin-based polymer according to Claim 1, wherein:
a melt index (MI) is from 0.3 g/10 min to 10.0 g/10 min; and
the total enthalpy of fusion ΔH(75) of the corresponding region is 1.0 J/g to 3.0 J/g,
wherein the olefin-based polymer is an olefin-based polymer obtained by a preparation method comprising: polymerizing an olefin-based monomer by injecting a hydrogen gas in the presence of a catalyst composition for polymerizing olefin, the catalyst composition comprising a transition metal compound of the following Formula 1: 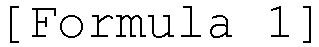 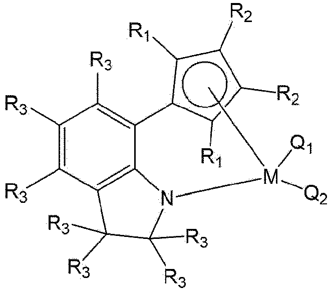
in Formula 1,
R₁ and R₂ groups are the same or different and each independently hydrogen or alkyl of 1 to 20 carbon atoms;
R₃ groups are the same or different and each independently hydrogen, halogen, or alkyl of 1 to 20 carbon atoms;
M is Ti; and
Q₁ and Q₂ are each independently halogen or alkyl of 1 to 20 carbon atoms.

## Patentansprüche

1. Olefinbasiertes Polymer, erfüllend die folgenden Bedingungen (1) bis (4):
(1) der Schmelzindex MI, bestimmt bei 190°C unter einer Last von 2,16 kg, beträgt 0,1 g/10 min bis 10,0 g/10 min,
(2) die Schmelztemperatur, gemessen durch dynamische Differenzkalorimetrie, beträgt von 20°C bis 70°C, und
(3) im Bereich von 75°C bis 150°C wird ein Hochtemperatur-Schmelzpeak beobachtet, wenn mittels eines präzisen dynamischen Differenzkalorimetrie-Messverfahrens (SSA) gemessen wird, und die gesamte Schmelzenthalpie ΔH(75) des entsprechenden Bereichs beträgt 1,0 J/g oder mehr, und
(4) die Dichte (d) beträgt von 0,850 g/ccm bis 0,890 g/ccm;
worin das olefinbasierte Polymer ein Copolymer von Ethylen und irgendeinem ist, das ausgewählt ist aus der Gruppe bestehend aus Propylen, 1-Buten, 1-Penten, 4-Methyl-1-penten, 1-Hexen, 1-Hepten und 1-Octen, oder Mischungen von zwei oder mehr hiervon;
worin die Messung der Schmelztemperatur (Tm) unter Verwendung von dynamischer Differenzkalorimetrie durchgeführt wird durch einen ersten Zyklus, umfassend Erwärmen auf eine Temperatur, die 30°C höher ist als die Schmelztemperatur (Tm), in konstanter Geschwindigkeit, und das Abkühlen auf eine Temperatur, die um 30°C niedriger ist als die Glasübergangstemperatur (Tg), in konstanter Geschwindigkeit, und einen zweiten Zyklus, um den Peak der Standard-Schmelztemperatur (Tm) zu erhalten, und worin das präzise, dynamische Differenzkalorimetrie-Messverfahren (SSA) ein Verfahren zum Erhalt von Kristallinformationen durch Unterziehen unter einen Prozess zum Erwärmen unmittelbar vor dem Peak der Schmelztemperatur (Tm) und Abkühlen nach dem ersten Zyklus unter Verwendung von dynamischer Differenzkalorimetrie (DSC), und wiederholtes Durchführen des Erwärmens bis auf eine Temperatur, die um 5°C reduziert ist, und Abkühlen, ist; und
worin die Dichte, der Hochtemperatur-Schmelzpeak, und die gesamte Schmelzenthalpie ΔH(75) in Übereinstimmung mit den Verfahren bestimmt werden, die in der Beschreibung beschrieben sind.

2. Olefinbasiertes Polymer gemäß Anspruch 1, worin das olefinbasierte Polymer zusätzlich die folgende Bedingung erfüllt: (5) das gewichtsgemittelte Molekulargewicht (Mw) beträgt von 10.000 g/mol bis 500.000 g/mol, bestimmt in Übereinstimmung mit dem in der Beschreibung angegebenen Verfahren.

3. Olefinbasiertes Polymer gemäß Anspruch 1, worin das olefinbasierte Polymer zusätzlich die folgende Bedingung erfüllt: (6) die Molekulargewichtsverteilung (MWD) beträgt von 1,0 bis 6,0, bestimm in Übereinstimmung mit dem in der Beschreibung angegebenen Verfahren.

4. Olefinbasiertes Polymer gemäß Anspruch 1, worin der Schmelzindex (MI) des olefinbasierten Polymers 0,3 g/10 min bis 9,0 g/10 min beträgt.

5. Olefinbasiertes Polymer gemäß Anspruch 1, worin das olefinbasierte Polymer einen Temperaturbereich von 75°C bis 150°C aufweist, in dem der Hochtemperatur-Schmelzpeak beobachtet wird, wenn mit dem präzisen dynamischen Differenzkalorimetrie-Messverfahren (SSA) gemessen wird, und die gesamte Schmelzenthalpie ΔH(75) des entsprechenden Bereichs 1,0 J/g bis 3,0 J/g beträgt.

6. Olefinbasierte Polymer gemäß Anspruch 1, worin das olefinbasierte Polymer ein Copolymer von Ethylen und 1-Buten ist.

7. Olefinbasiertes Polymer gemäß Anspruch 1, worin:
der Schmelzindex (MI) von 0,3 g/10 min bis 9,0 g/10 min beträgt;
der Temperaturbereich, in dem ein Hochtemperatur-Schmelzpeak beobachtet wird, wenn mit einem präzisen, dynamischen Differenzkalorimetrie-Messerverfahren (SSA) gemessen wird, 75°C bis 150°C ist, und die gesamte Schmelzenthalpie ΔH(75) des entsprechenden Bereichs 1,0 J/g bis 3,0 J/g beträgt;
das gewichtsgemittelte Molekulargewicht (Mw) von 10.000 bis 500.000 g/mol beträgt;
die Molekulargewichtsverteilung (MWD) von 1,0 bis 6,0 beträgt; und
die Schmelztemperatur, wenn mittels dynamischer Differenzkalorimetrie (DSC) gemessen wird, von 20°C bis 60°C beträgt.

8. Olefinbasiertes Polymer gemäß Anspruch 1, worin das olefinbasierte Polymer ein olefinbasiertes Polymer ist, das durch ein Herstellungsverfahren erhalten ist, umfassend: Polymerisieren eines olefinbasierten Monomers durch Einspritzen von Wasserstoffgas in der Gegenwart einer Katalysatorzusammensetzung zum Polymerisieren von Olefin, wobei die Katalysatorzusammensetzung eine Übergangsmetallverbindung der folgenden Formel 1 umfasst: 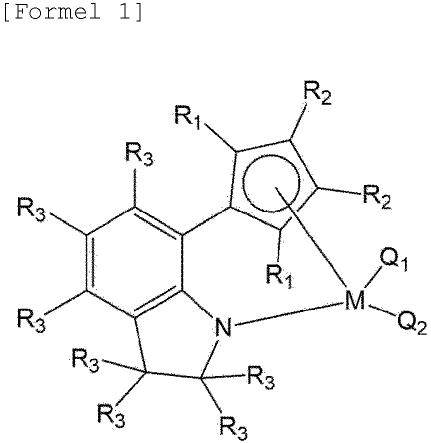 worin in der Formel 1
R₁- und R₂-Gruppen gleich oder verschieden sind und jeweils unabhängig Wasserstoff oder Alkyl mit 1 bis 20 Kohlenstoffatomen sind;
R₃-Gruppen gleich oder voneinander verschieden sind und jeweils unabhängig Wasserstoff; Halogen; oder Alkyl mit 1 bis 20 Kohlenstoffatomen sind;
M Ti ist; und
Q₁ und Q₂ jeweils unabhängig Halogen; oder Alkyl mit 1 bis 20 Kohlenstoffatomen sind.

9. Olefinbasiertes Polymer gemäß Anspruch 1, worin das olefinbasierte polymer hergestellt ist durch kontinuierliche Lösungspolymerisationsreaktion unter Verwendung eines kontinuierlichen Rührtankreaktors durch Einspritzen von Wasserstoffgas in der Gegenwart einer Katalysatorzusammensetzung zum Polymerisieren von Olefin.

10. Olefinbasiertes Polymer gemäß Anspruch 1, worin:
der Schmelzindex (MI) von 0,3 g/10 min bis 10,0 g/10 min beträgt; und
die gesamte Schmelzenthalpie ΔH(75) des entsprechenden Bereichs 1,0 J/g bis 3,0 J/g beträgt,
worin das olefinbasierte Polymer ein olefinbasiertes Polymer ist, das durch ein Herstellungsverfahren erhalten ist, umfassend: Polymerisieren eines olefinbasierten Monomers durch Einspritzen eines Wasserstoffgases in der Gegenwart einer Katalysatorzusammensetzung zum Polymerisieren von Olefin, wobei die Katalysatorzusammensetzung eine Übergangsmetallverbindung der folgenden Formel 1 umfasst: 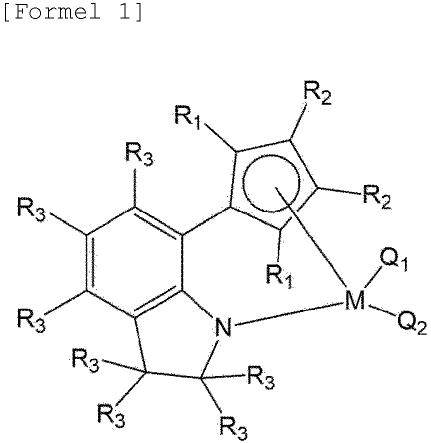
worin in der Formel 1
R₁- und R₂-Gruppen gleich oder verschieden sind und jeweils unabhängig Wasserstoff oder Alkyl mit 1 bis 20 Kohlenstoffatomen sind;
R₃-Gruppen gleich oder voneinander verschieden sind und jeweils unabhängig Wasserstoff; Halogen; oder Alkyl mit 1 bis 20 Kohlenstoffatomen sind;
M Ti ist; und
Q₁ und Q₂ jeweils unabhängig Halogen; oder Alkyl mit 1 bis 20 Kohlenstoffatomen sind.

## Revendications

1. Un polymère à base d'oléfine satisfaisant les conditions (1) à (4) suivantes :
(1) un indice de fusion MI, déterminé à 190°C sous une charge de 2,16 kg, est de 0,1 g/10 min à 10,0 g/10 min,
(2) une température de fusion, mesurée par calorimétrie à balayage différentiel, est de 20°C à 70°C, et
(3) un pic de fusion à haute température est confirmé à 75°C à 150°C lorsque mesuré par une méthode de mesure précise de calorimétrie différentielle à balayage (SSA), et une enthalpie totale de fusion ΔH(75) de la région correspondante est de 1,0 J/g ou plus, et
(4) une densité (d) est de 0,850 g/cc à 0,890 g/cc ;
dans lequel le polymère à base d'oléfine est un copolymère d'éthylène et de l'un quelconque choisi parmi le groupe constitué par le propylène, le 1-butène, le 1-pentène, le 4-méthyl-1-pentène, le 1-hexène, le 1-heptène et le 1-octène, ou des mélanges de deux ou plusieurs d'entre eux ;
dans lequel la mesure d'une température de fusion (Tm) par calorimétrie différentielle à balayage est effectuée par un premier cycle comportant un chauffage à une température supérieure de 30°C à la température de fusion (Tm) à un taux constant, et un refroidissement à une température inférieure de 30°C à une température de transition vitreuse (Tg) à un taux constant, et un second cycle pour obtenir le pic d'une température de fusion standard (Tm), et dans lequel la méthode de mesure précise par calorimétrie différentielle à balayage (SSA) est une méthode d'obtention d'informations sur les cristaux par un processus de chauffage immédiatement avant le pic d'une température de fusion (Tm) et de refroidissement après le premier cycle en utilisant la calorimétrie différentielle à balayage (DSC), et en effectuant de manière répétée un chauffage à une température réduite de 5°C et un refroidissement ; et
dans lequel la densité, le pic de fusion à haute température et l'enthalpie totale de fusion ΔH(75) sont déterminés selon les méthodes décrites dans la spécification.

2. Le polymère à base d'oléfine selon la revendication 1, dans lequel le polymère à base d'oléfine satisfait en outre à la condition suivante : (5) un poids moléculaire moyen en poids (Mw) est de 10000 g/mol à 500000 g/mol, déterminé selon la méthode décrite dans la spécification.

3. Le polymère à base d'oléfine selon la revendication 1, dans lequel le polymère à base d'oléfine satisfait en outre à la condition suivante : (6) une distribution de poids moléculaire (MWD) est de 1,0 à 6,0, déterminée selon la méthode décrite dans la spécification.

4. Le polymère à base d'oléfine selon la revendication 1, dans lequel l'indice de fusion (MI) du polymère à base d'oléfine est de 0,3 g/10 min à 9,0 g/10 min.

5. Le polymère à base d'oléfine selon la revendication 1, dans lequel le polymère à base d'oléfine a un domaine de température de 75°C à 150°C, auquel le pic de fusion à haute température est confirmé lorsqu'il est mesuré par la méthode de mesure précise de calorimétrie différentielle à balayage (SSA), et l'enthalpie totale de fusion ΔH(75) de la région correspondante est de 1,0 J/g à 3,0 J/g.

6. Le polymère à base d'oléfine selon la revendication 1, dans lequel le polymère à base d'oléfine est un copolymère d'éthylène et de 1-butène.

7. Un polymère à base d'oléfine selon la revendication 1, dans lequel :
un indice de fusion (MI) est de 0,3 g/10 min à 9,0 g/10 min ;
un domaine de température dans lequel un pic de fusion à haute température est confirmé lorsqu'il est mesuré par une méthode de mesure précise de calorimétrie différentielle à balayage (SSA) est de 75°C à 150°C, et une enthalpie totale de fusion ΔH(75) de la région correspondante est de 1,0 J/g à 3,0 J/g ;
un poids moléculaire moyen en poids (Mw) est de 10000 à 500000 g/mol ;
une distribution de poids moléculaire (MWD) est de 1,0 à 6,0 ; et
une température de fusion mesurée par calorimétrie à balayage différentiel (DSC) est de 20°C à 60°C.

8. Le polymère à base d'oléfine selon la revendication 1, dans lequel le polymère à base d'oléfine est un polymère à base d'oléfine obtenu par une méthode de préparation comprenant : la polymérisation d'un monomère à base d'oléfine par l'injection d'un gaz d'hydrogène en présence d'une composition catalytique pour la polymérisation d'oléfine, la composition catalytique comprenant un composé de métal de transition de la Formule 1 suivante : 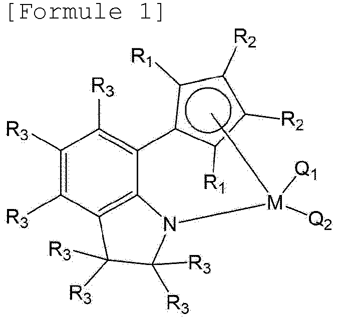 dans la Formule 1,
les groupes R₁ et R₂ sont identiques ou différents et chacun indépendamment un hydrogène ou un alkyle de 1 à 20 atomes de carbone ;
les groupes R₃ sont identiques ou différents et chacun indépendamment un hydrogène, un halogène ou un alkyle de 1 à 20 atomes de carbone ;
M est Ti ; et
Q₁ et Q₂ sont chacun indépendamment un halogène ou un alkyle de 1 à 20 atomes de carbone.

9. Le polymère à base d'oléfine selon la revendication 1, dans lequel le polymère à base d'oléfine est préparé par une réaction de polymérisation en solution continue à l'aide d'un réacteur à agitation continue en injectant un gaz d'hydrogène en présence d'une composition catalytique pour polymériser l'oléfine.

10. Le polymère à base d'oléfine selon la revendication 1, dans lequel :
un indice de fusion (MI) est de 0,3 g/10 min à 10,0 g/10 min ; et
l'enthalpie totale de fusion ΔH(75) de la région correspondante est de 1,0 J/g à 3,0 J/g,
dans lequel le polymère à base d'oléfine est un polymère à base d'oléfine obtenu par une méthode de préparation comprenant : la polymérisation d'un monomère à base d'oléfine par l'injection d'un gaz d'hydrogène en présence d'une composition catalytique pour la polymérisation d'oléfine, la composition catalytique comprenant un composé de métal de transition de la Formule 1 suivante : 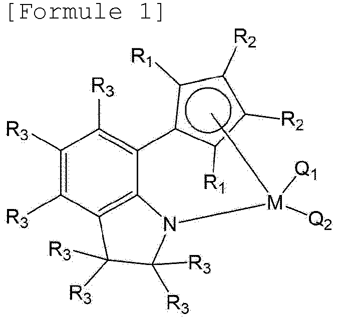
dans la Formule 1,
les groupes R₁ et R₂ sont identiques ou différents et chacun indépendamment un hydrogène ou un alkyle de 1 à 20 atomes de carbone ;
les groupes R₃ sont identiques ou différents et chacun indépendamment un hydrogène, un halogène ou un alkyle de 1 à 20 atomes de carbone ;
M est Ti ; et
Q₁ et Q₂ sont chacun indépendamment un halogène ou un alkyle de 1 à 20 atomes de carbone.
